# EUROPEAN PATENT APPLICATION

(11) **EP 4 776 103 A1**
(43) Date of publication of application: **15.07.2026**
(21) Application number: 24925133.1
(22) Date of filing: 03.09.2024
(51) Int. Cl.: G06F 1/3296, G06F 1/20, G06F 1/3206

(54) **POWER CONSUMPTION MANAGEMENT METHOD FOR PROCESSING UNIT, APPARATUS, SYSTEM AND STORAGE MEDIUM**

(71) Applicant: VeriSilicon Microelectronics (Shanghai) Co., Ltd., Shanghai 201203 (CN); VeriSilicon Microelectronics (Chengdu) Co., Ltd., Chengdu, Sichuan 610041 (CN); Verisilicon Microelectronics (Hainan) Co., Ltd., Haikou, Hainan 570208 (CN); VeriSilicon Microelectronics (Nanjing) Co., Ltd., Nanjing, Jiangsu 211500 (CN); VeriSilicon Technology (Shanghai) Co., Ltd., Shanghai 201306 (CN)
(72) Inventor: XIE, Wei, Shanghai 201203 (CN)
(74) Representative: Bryn Aarflot AS
(86) International application number: PCT/CN2024/116431
(87) International publication number: WO 2026/050881

(57) **Abstract**

The present invention provides a power consumption management method and device for a processing unit, a system, and a storage medium, relating to the technology field of neural networks. The power consumption management method for a processing unit is applied to a control unit of an electronic equipment, wherein the electronic equipment further comprises a processing unit, and the control unit is connected to the processing unit; and the method comprises: obtaining a parameter value of an environmental parameter of a working environment of the processing unit; determining, based on the parameter value of the environmental parameter and a preset corresponding relationship, a target electrical parameter value of a preset working electrical parameter; the preset corresponding relationship includes a corresponding relationship between different parameter values of the environmental parameter and different target electrical parameter values of the preset working electrical parameter, and the different target electrical parameter values of the preset working electrical parameter are electrical parameter values that enable the power consumption of the processing unit to meet a preset requirement at different parameter values of the environmental parameter; and controlling the preset working electrical parameter of the processing unit to execute a current task with the target electrical parameter value. By the above method, the power consumption of the processing unit in the electronic equipment can be reduced.

## Description

### TECHNICAL FIELD

The present invention relates to the technology field of neural networks, and specifically, provides a power consumption management method and device for a processing unit, a system, and a storage medium.

### BACKGROUND ART

Processing units are widely applied in various devices. As the requirements for standby time and operating time of devices increase, the power consumption requirements of processing units also rise accordingly. For example, some devices powered by batteries need to reduce the power consumption of the processing unit to improve the endurance capability of the device.

Currently, the methods for low-power management of processing units are limited, typically only cutting off the power to the processing unit when the device is powered off, while during the operation of the device, the processing unit remains powered and waits for subsequent tasks at a rated working frequency of the processing unit. This approach results in a relatively high power consumption of the processing unit when the device is running.

### SUMMARY

In view of this, the present invention aims to provide a power consumption management method and device for the processing unit, a system, and a storage medium to reduce the power consumption of the processing unit.

In a first aspect, an embodiment of the present invention provides a power consumption management method for a processing unit, applied to the control unit of an electronic equipment, wherein the electronic equipment further includes a processing unit, and the control unit is connected to the processing unit. The power consumption management method for the processing unit includes: obtaining a parameter value of an environmental parameter of a working environment of the processing unit; determining, based on the parameter value of the environmental parameter and a preset corresponding relationship, a target electrical parameter value of a preset working electrical parameter, wherein the preset corresponding relationship includes a corresponding relationship between different parameter values of the environmental parameter and different target electrical parameter values of the preset working electrical parameter, and the different target electrical parameter values of the preset working electrical parameter are electrical parameter values that enable the power consumption of the processing unit to meet a preset requirement at different parameter values of the environmental parameter; and controlling the preset working electrical parameter of the processing unit to execute a current task with the target electrical parameter value.

Different working environments affect the operational efficiency of the processing unit differently, thereby affecting the power consumption of the processing unit when performing the same task. In the embodiment of the present invention, environmental parameters can be obtained, and based on the environmental parameters, the corresponding target electrical parameter value of the preset working electrical parameter for the processing unit can be configured. The different target electrical parameter values of the preset working electrical parameter are electrical parameter values that enable the power consumption of the processing unit to meet a preset requirement at different parameter values of the environmental parameter. Thus, the processing unit can execute tasks in different environments, and uses working electrical parameters that can enable the processing unit to have a relatively high working efficiency under the current environment, thereby reducing the power consumption of the processing unit when performing the current task.

In one embodiment, the environmental parameters include a current temperature of the working environment of the processing unit. The preset corresponding relationship includes a corresponding relationship between different temperature ranges of the current temperature and different electrical parameter values of the preset working electrical parameter. The step of determining, based on the parameter value of the environmental parameter and a preset corresponding relationship, a target electrical parameter value of a preset working electrical parameter includes: determining a target temperature range in which the temperature value of the current temperature is located, in the parameter values of the environmental parameter; and determining the target electrical parameter value of the preset working electrical parameter corresponding to the target temperature range based on the preset corresponding relationship.

The current temperature of the working environment of the processing unit has a significant impact on the power consumption of the processing unit. The higher the temperature is, the higher the power consumption of the processing unit under the same electrical parameter value of the working electrical parameter is. Under fixed heat dissipation performance, the increase in power consumption can even cause the chip temperature of the processing unit to rise, which may lead to a crash. In the embodiment of the present invention, corresponding target electrical parameter values are set for different temperature ranges to ensure that the processing unit can have lower power consumption in different temperature environments and that the temperature rise of the processing unit is slower, thereby enabling the processing unit to remain in a low-power operating state for a longer time.

In one embodiment, the electronic equipment further includes a power supply that provides power to the processing unit, and the control unit, the processing unit, and the power supply are connected to each other. The environmental parameters include a current power supply voltage that powers the processing unit. The preset corresponding relationship includes a corresponding relationship between different power supply voltage ranges of the power supply and different electrical parameter values of the preset working electrical parameter. The step of determining, based on the parameter value of the environmental parameter and a preset corresponding relationship, a target electrical parameter value of a preset working electrical parameter includes: determining a target voltage range in which the voltage value of the current power supply voltage is located, in the parameter values of the environmental parameter; and determining the target electrical parameter value of the preset working electrical parameter corresponding to the target voltage range based on the preset corresponding relationship.

The working environment of the processing unit includes a power supply environment, and the power supply environment includes the current power supply voltage powering the processing unit. If the current power supply voltage is insufficient to support stable operation of the processing unit at a high voltage or high working frequency, keeping the processing unit running at a high voltage or high working frequency can result in excessive power consumption of the processing unit. Therefore, in the embodiment of the present invention, different target voltage ranges can be set. After determining the current power supply voltage, the target voltage range of the processing unit can be determined based on the current power supply voltage, and the corresponding target electrical parameter value can be determined. In this way, the processing unit can execute tasks with an operation electrical parameter value that matches the current power supply environment, reducing additional power consumption.

In one embodiment, the electronic equipment further includes a power supply that provides power to the processing unit, and the control unit, the processing unit, and the power supply are connected to each other. The environmental parameters include a current power supply capacity that powers the processing unit. The preset corresponding relationship includes a corresponding relationship between different power supply capacity ranges of the current power supply capacity and different electrical parameter values of the preset working electrical parameter. The step of determining, based on the parameter value of the environmental parameter and a preset corresponding relationship, a target electrical parameter value of a preset working electrical parameter includes: determining a target power supply capacity range in which the current power supply capacity is located, in the parameter values of the environmental parameter; and determining the target electrical parameter value of the preset working electrical parameter corresponding to the target power supply capacity range based on the preset corresponding relationship.

The power supply environment of the processing unit also includes the current power supply capacity powering the processing unit. If the processing unit still operates at high power consumption when the current power supply capacity is insufficient, this could cause the power to be quickly depleted and result in the power supply being unable to continuously provide stable power supply voltage, which may cause the processing unit to crash. Therefore, in the embodiment of the present invention, different target power supply capacity ranges can be set. After determining the current power supply capacity, the target power supply capacity range of the processing unit can be determined based on the current power supply capacity, and the corresponding target electrical parameter value can be determined. In this way, the processing unit can execute tasks with an operation electrical parameter value that matches the current power supply environment, reducing additional power consumption.

In one embodiment, the electronic equipment further includes a power supply that provides power to the processing unit, and the control unit, the processing unit, and the power supply are connected to each other. After the step of controlling the preset working electrical parameter of the processing unit to execute a current task with the target electrical parameter value, the method further includes: starting a timer in response to the processing unit completing the current task; and controlling, if no new task is received by the processing unit when a timing duration reaches a preset duration, the power supply to stop supplying power to the processing unit.

Compared to continuing to supply power to the processing unit even when no task is being executed, or keeping it at the rated working frequency while waiting for a new task, in the embodiment of the present invention, after the processing unit completes a task, the timer starts, and if no new task is received when the timer reaches the preset duration, it is highly likely that the processing unit does not need to execute a new task temporarily, and thus, the power supply is cut off to the processing unit, so that the processing unit does not consume power, thereby effectively reducing the power consumption of the electronic equipment caused by the processing unit.

In one embodiment, after the timer starts, the method further includes: configuring the preset working electrical parameter of the processing unit to a minimum electrical parameter value allowed when the processing unit is in a working state, where the preset working electrical parameter includes a working electrical parameter related to the power consumption of the processing unit.

The working electrical parameter of the processing unit can affect the working performance of the processing unit. The preset working electrical parameter includes a working electrical parameter related to the power consumption of the processing unit. Reducing the electrical parameter value of the preset working electrical parameter can lower the working performance of the processing unit, thereby reducing the power consumption of the processing unit. In the embodiment of the present invention, during the waiting period for a new task before the preset duration is reached, since the processing unit is not executing work, reducing the electrical parameter value of the preset working electrical parameter will not easily cause negative effects. Therefore, the preset working electrical parameter can be configured to the minimum electrical parameter value allowed when the processing unit is in a working state, in order to reduce power consumption. At the same time, since the processing unit remains in a working state and is not powered off, the processing unit can quickly respond to the demand to execute a new task.

In one embodiment, the preset working electrical parameter includes at least one of the working frequency and the working voltage of the processing unit.

In the embodiment of the present invention, the main working electrical parameters that affect the power consumption of the processing unit are the working frequency and the working voltage. By using at least one of them as the preset working electrical parameter and adjusting it, the power consumption of the processing unit can be effectively reduced after adjusting the electrical parameter value of the working electrical parameter.

In one embodiment, after the timer starts, the method further includes: controlling the processing unit to enter a standby state when it is in the power supply state, wherein, in the standby state, the working frequency of the processing unit is 0.

In the embodiment of the present invention, during the waiting period for a new task, after the timer starts, the processing unit enters a standby state. In the standby state, the working frequency is 0, which can reduce the power consumption of the processing unit.

In one embodiment, the power consumption management method for the processing unit further includes: controlling, when the processing unit is in a powered-off state and in response to a request to assign a new task to the processing unit, the power supply to provide power to the processing unit.

Compared to the method where the processing unit is supplied with power continuously after the device is started, in the embodiment of the present invention, provided that the processing unit has a need to perform the task, the processing unit is only supplied with power in response to the request to assign a new task, allowing the new task to be normally executed by the processing unit. At other times, the processing unit remains in a powered-off state, thus effectively reducing power consumption when the processing unit is not executing tasks.

In one embodiment, after the step of starting a timer in response to the processing unit completing the current task, the method further includes: stopping the timer, if the processing unit receives a new task before the timing duration reaches the preset duration; re-acquiring the parameter value of the environment parameters; re-determining, based on the re-acquired parameter value of the environment parameters, the target electrical parameter value of the preset working electrical parameter; and controlling the processing unit to execute the new task based on the re-determined target electrical parameter value.

In the embodiment of the present invention, each time a new task is executed, the parameter values of the environment parameters are re-determined, and the new target electrical parameter values are re-determined, so as to re-determine the new target electrical parameter value work. Thus, this allows the processing unit, after a change in its working environment, to execute tasks with target electrical parameter values that match the parameter values of the current environmental parameter, which effectively reduces the excessive power consumption caused by mismatched electrical parameter values of the working electrical parameters due to environmental changes.

In a second aspect, an embodiment of the present invention provides a power consumption management device for a processing unit, applied to the control unit of an electronic equipment, wherein the electronic equipment further includes a processing unit, and the control unit is connected to the processing unit. The power consumption management device for the processing unit includes: an acquisition module and a control module, wherein the acquisition module is configured for obtaining a parameter value of an environmental parameter of a working environment of the processing unit; the control module is configured for determining, based on the parameter value of the environmental parameter and a preset corresponding relationship, a target electrical parameter value of a preset working electrical parameter, wherein the preset corresponding relationship includes a corresponding relationship between different parameter values of the environmental parameter and different target electrical parameter values of the preset working electrical parameter, and the different target electrical parameter values of the preset working electrical parameter are electrical parameter values that enable the power consumption of the processing unit to meet a preset requirement at different parameter values of the environmental parameter; and controlling the preset working electrical parameter of the processing unit to execute a current task with the target electrical parameter value.

In a third aspect, the embodiment of the present invention provides an electronic equipment, including: a control unit, configured to execute the power consumption management method for the processing unit as described in any of the first aspects; a processing unit, connected to the control unit; an environment monitoring unit, configured to monitor the working environment of the processing unit and obtain environment parameters, wherein the environment monitoring unit is also connected to the control unit and is also configured to provide the environment parameters to the control unit so that the control unit can execute the power consumption management method for the processing unit as described in any of the first aspects; and a power supply, connected to both the control unit and the processing unit, and configured to supply or cut off power to the processing unit in response to the control of the control unit.

In a fourth aspect, the embodiment of the present invention provides a readable storage medium, wherein the readable storage medium stores a program. When the program is run on the processing unit, it enables the processing unit to execute the power consumption management method for the processing unit as described in any of the first aspects.

### BRIEF DESCRIPTION OF DRAWINGS

In order to more clearly illustrate the technical solutions of the embodiments of the present invention, the following will briefly introduce the drawings used in the embodiments of the present invention. It should be understood that the following drawings only show some embodiments of the present invention, and therefore it should not be regarded as a limitation on the scope. Those ordinary skilled in the art can also obtain other related drawings based on these drawings without inventive effort.
FIG. 1 is a flowchart of a power consumption management method for a processing unit provided by one embodiment of the present invention;
FIG. 2 is a supplementary flowchart of a power consumption management method for a processing unit provided by one embodiment of the present invention;
FIG. 3 is a schematic diagram of a complete process of a power consumption management method for a processing unit provided by one embodiment of the present invention;
FIG. 4 is a schematic diagram of a power consumption management device for a processing unit provided by one embodiment of the present invention; and
FIG. 5 is a schematic diagram of an electronic equipment provided by one embodiment of the present invention.

Reference numerals: power consumption management device for a processing unit 400; timer module 410; power on/off module 420; control module 430; acquisition module 440; electronic equipment 500; control unit 510; processing unit 520; power supply 530; environment monitoring unit 540.

### DETAILED DESCRIPTION OF EMBODIMENTS

In order to make the objective, technical solutions, and advantages of the embodiments of the present invention clearer and more understandable, the present invention is described in further detail hereinafter in conjunction with the accompanying drawings and embodiments. It should be understood that the specific embodiments described herein are for the sole purpose of explaining the present invention and are not intended to limit the present invention.

First, the embodiment of the present invention provides a power consumption management method for a processing unit, and the method can be applied to the control unit of an electronic equipment. The electronic equipment further includes a processing unit and a power supply that powers the processing unit. The processing unit can be an NPU (Neural-Network Processing Unit), GPU (Graphics Processing Unit), ISP (Image Signal Processor), DPU (Display Processing Unit), or VPU (Video Processing Unit), and the control unit can be a CPU (Central Processing Unit) or MCU (Microcontroller Unit), among others.

In the embodiment of the present invention, the control unit is connected to both the NPU and the power supply. The control unit can adjust the power consumption of the NPU at different moments by controlling the operation of the NPU and controlling the power supply to supply or cut off power to the NPU.

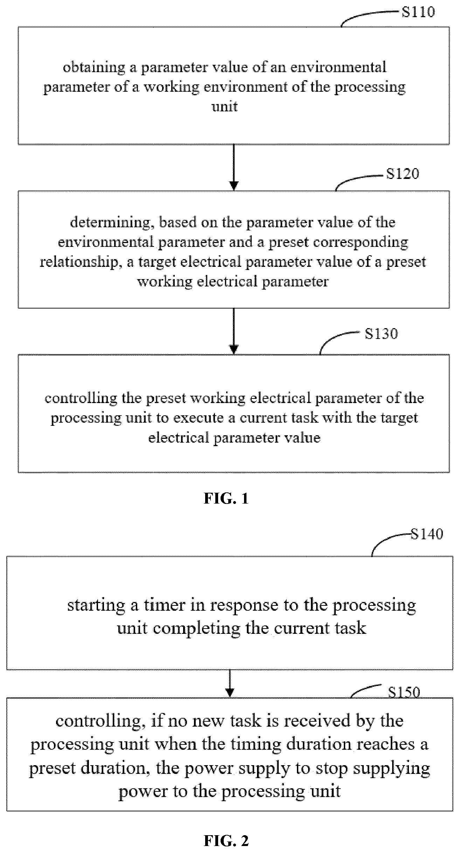

Referring to FIG. 1, FIG. 1 shows a flowchart of a power consumption management method for a processing unit according to one embodiment of the present invention. The power consumption management method for the processing unit includes the following steps.

S110: obtaining a parameter value of an environmental parameter of a working environment of the processing unit.

The working environment of the processing unit has a certain impact on the power consumption of the processing unit. Configuring corresponding electrical parameter values of the working electrical parameters for the processing unit in different working environments helps ensure that the power consumption of the processing unit does not exceed necessary levels, provided that the processing unit can work properly and complete the tasks. Working electrical parameters refer to the electrical parameters of the processing unit during operation, such as working frequency, working voltage, working current, and power.

In the embodiment of the present invention, the working environment of the processing unit includes, but is not limited to, external conditions such as temperature and humidity, and can also include the power supply environment of the processing unit, such as the power supply capacity.

In the embodiment of the present invention, the electronic equipment is provided with an environment detection unit, and the environment detection unit includes specialized components or circuits for detection, such as temperature sensors and humidity sensors, and corresponding detection circuits configured in the power supply circuit, to detect power supply voltage, current, and power capacity. The control unit can be connected to the environment detection unit to receive the detected parameter values of the environmental parameter.

S120: determining, based on the parameter value of the environmental parameter and a preset corresponding relationship, a target electrical parameter value of a preset working electrical parameter.

In the embodiment of the present invention, the preset working electrical parameter includes a working electrical parameter related to the power consumption of the processing unit. For example, the preset working electrical parameter can include the working frequency of the processing unit; the higher the working frequency of the processing unit, the higher the power consumption. Moreover, the preset working electrical parameter can also include a working voltage. For example, the processing unit includes a high-working-voltage state and a low-working-voltage state, where the power consumption is higher in the high-working-voltage state. Different processing units have different voltage values in the high-working-voltage state and the low-working voltage state, which can be referenced in the prior art without further elaboration herein.

In the embodiment, the preset corresponding relationship includes a corresponding relationship between different parameter values of the environmental parameter and different target electrical parameter values of the preset working electrical parameter. The different target electrical parameter values of the preset working electrical parameter are electrical parameter values that enable the power consumption of the processing unit to meet a preset requirement at different parameter values of the environmental parameter.

The preset requirement can be specifically configured based on the performance of the processing unit and the requirements for the tasks to be executed, which is not elaborated further herein. The objective of the embodiment is to separately configure electrical parameter values that meet the preset requirements for different parameter value conditions of the same environmental parameter. For example, when the temperature is 20°C, the corresponding working frequency is 100%, and when the temperature is 50°C, the corresponding working frequency is 50%. Similarly, for different humidity levels, power supply environments, and other environmental parameters, similar configurations can be made. The adjustments can involve not only the working frequency but also the working voltage or other preset working electrical parameters. Through the method, the preset corresponding relationship can be obtained.

For each type of environmental parameter, a separate corresponding relationship can be established. In one embodiment of the present invention, for example, the environmental parameters include a current temperature of the working environment of the processing unit. The preset corresponding relationship includes a corresponding relationship between different temperature ranges of the current temperature and different electrical parameter values of the preset working electrical parameter.

In the embodiment, the temperature range where the optimal operating temperature of the processing unit is located can be associated with the maximum value of the preset working electrical parameter of the processing unit. For instance, if the optimal temperature for a certain processing unit is 15°C, the temperature range containing 15°C can be associated with the maximum value of the preset working electrical parameter. For example, if the preset working electrical parameter is a working frequency or a working voltage, and the classified temperature range includes a temperature range below 20°C, the corresponding working frequency of the temperature range is 100% or the highest working voltage.

Conversely, the processing units will all have maximum working temperatures, and prolonged operation under high temperatures could lead to system crashes. To ensure that the processing unit can continue working for extended periods under high temperatures, it is necessary to make the temperature rise more slowly or lower the temperature. Reducing the working frequency and working voltage can decrease power consumption, which in turn slows the temperature rise. Under a better heat dissipation, the temperature may even drop, thus allowing the NPU to remain operational for a longer time.

In the embodiment, the temperature range where the maximum allowable operating temperature of the processing unit is located can be associated with the minimum value of the preset working electrical parameter of the processing unit. For example, if the processing unit can work at a maximum temperature of 80°C, with a minimum working frequency of 20% or a minimum working voltage of 0.2 times the maximum working voltage, if the preset working electrical parameter is a working frequency or a working voltage, and the classified temperature range includes a temperature range of 70°C to 80°C, the corresponding working frequency of the temperature range is 20% or 0.2 times the maximum working voltage. Other temperature ranges can be obtained through experimental testing. The aforementioned ranges are provided only as examples and should not be construed as limitations to the present invention. In the embodiment of the present invention, if there are multiple preset working electrical parameters, one or more of them can be adjusted, and there is no restriction here.

Similarly, in the embodiment, the step of determining, based on the parameter value of the environmental parameter and a preset corresponding relationship, a target electrical parameter value of a preset working electrical parameter can include: determining a target temperature range in which the temperature value of the current temperature is located, in the parameter values of the environmental parameter; and determining the target electrical parameter value of the preset working electrical parameter corresponding to the target temperature range based on the preset corresponding relationship.

In the embodiment, the target temperature range in which the value of the current temperature in the acquired environmental parameters falls within can be determined, and then, based on the target temperature range, the corresponding target electrical parameter value of the preset working electrical parameter is determined. The processing unit is then adjusted according to the determined target parameter value. Thus, the working electrical parameter value of the processing unit can be matched with the current environment, thus allowing the neural network processing to perform tasks with higher efficiency and reduce power consumption during task execution.

For ease of understanding, an example is provided here for illustration, and the example should not be considered as a limitation on the present invention.

In the example, six target temperature ranges are provided as follows: less than or equal to 20°C, greater than 20°C but less than or equal to 40°C, greater than 40°C but less than or equal to 60°C, greater than 60°C but less than or equal to 70°C, greater than 70°C but less than or equal to 80°C, and greater than 80°C.

The target temperature range of less than 20°C corresponds to a 100% working frequency state and the highest voltage state. The target temperature range of greater than 20°C but less than or equal to 40°C corresponds to a 70% working frequency state or 70% highest voltage state. The target temperature range of greater than 40°C but less than or equal to 60°C corresponds to a 50% working frequency state or 50% highest voltage state. The target temperature range of greater than 60°C but less than or equal to 70°C corresponds to a 30% working frequency state or 30% highest voltage state. The target temperature range of greater than 70°C but less than or equal to 80°C corresponds to a 20% working frequency state or 20% highest voltage state. The target temperature range of greater than 80°C corresponds to 0% working frequency and 0 working voltage.

Similarly, the working environment also includes the power supply environment. The processing unit is powered by a power supply, and the voltage of the power supply can be affected by various factors, making it impossible for the power supply voltage to meet the requirements of the processing unit. For example, if the voltage is relatively low, this can cause the processing unit to perform some additional tasks to complete its work normally, thereby affecting power consumption.

Therefore, in the embodiment of the present invention, the environmental parameters include a current power supply voltage that powers the processing unit. The preset corresponding relationship includes a corresponding relationship between different power supply voltage ranges of the power supply and different electrical parameter values of the preset working electrical parameter.

Similar to the current temperature, in the embodiment, multiple power supply voltage ranges can also be divided based on the highest power supply voltage and the lowest power supply voltage required by the processing unit. The target voltage range below the lowest power supply voltage corresponds to 0% working frequency and working voltage, meaning the processing unit stops working. Between the highest power supply voltage and the lowest power supply voltage, multiple power supply voltage ranges are divided, with each power supply voltage range corresponding to a different working frequency, and the working voltage corresponding to each power supply voltage range can be the lowest voltage within the range. If the power supply voltage provided by the power supply is greater than the power supply voltage required by the processing unit, it can correspond to 100% working frequency and working voltage.

For some electronic equipment s, their power supply is a battery, and the battery has a certain capacity. When the battery capacity is too low, it cannot be able to provide a suitable working environment that meets the requirements of the processing unit. Therefore, in the embodiment of the present invention, the environmental parameters can also include the current power supply capacity that powers the processing unit. Similarly, the preset corresponding relationship includes a corresponding relationship between different power supply capacities of the power supply and different electrical parameter values of the preset working electrical parameter.

The step of determining, based on the parameter value of the environmental parameter and a preset corresponding relationship, a target electrical parameter value of a preset working electrical parameter can include: determining a target power supply capacity range in which the current power supply capacity is located, in the parameter values of the environmental parameter; and determining the target electrical parameter value of the preset working electrical parameter corresponding to the target power supply capacity range based on the preset corresponding relationship.

Similar to the aforementioned content, in the embodiment, corresponding target parameter values of the preset working electrical parameter can also be configured for different power supply capacity ranges. For example, when the power supply capacity is greater than 50%, the corresponding working frequency is 100%, and the working voltage is at the highest value. If the power supply capacity is less than or equal to 50% and greater than 20%, the corresponding working frequency can be 50%, and the corresponding working voltage can be 50% of the maximum working voltage. If the power supply capacity is less than or equal to 20%, the working frequency and working voltage will be at the minimum values in the working state.

In some embodiments, if multiple environmental parameters change, their corresponding parameter values can be determined separately, and the lowest parameter value can be determined as the target parameter value for configuring the processing unit.

The above are all examples. Due to differences in the types of processing units, the types of electronic equipments, and the actual tasks in real-world scenarios, the electrical parameter values of the preset working electrical parameter that meet the preset requirements for the processing unit under different working environments vary. Therefore, the above parameter values and the number of divided ranges should not be regarded as limitations of the present invention.

S130: controlling the preset working electrical parameter of the processing unit to execute a current task with the target electrical parameter value.

In the embodiment, after determining the target electrical parameter value, the preset working electrical parameter is controlled to execute the current task using the target electrical parameter value, thereby making the processing unit meet the preset requirements and avoiding excessive power consumption of the processing unit.

Referring to FIG. 2, FIG. 2 is a supplementary flowchart of a power consumption management method for a processing unit provided by one embodiment of the present invention. In one embodiment of the present invention, the following process can be executed before the processing unit executes a task.

S140: starting a timer in response to the processing unit completing the current task.

In the embodiment, a timer program can be configured within the control unit, and the timer can perform timing.

In one embodiment of the present invention, the control unit can monitor the operation of the processing unit, determine whether the processing unit is executing a task, and upon completion of the current task, start the timer for timing. In other embodiments, the processing unit can send a signal to the control unit upon completion of the current task, so as to instruct the control unit to start the timer for timing. The above are examples only and should not be a limitation of the present invention.

In some embodiments, after the timer starts, the preset working electrical parameter of the processing unit is configured to a minimum electrical parameter value allowed when the processing unit is in a working state.

The working state refers to the state in which the processing unit is capable of executing tasks, and different tasks have different requirements for the processing unit. For example, some tasks require the processing unit to operate at a higher working frequency so that the task can be completed in a shorter time by the processing unit.

Since the processing unit has completed the current task and is waiting for a new task during the timing period, reducing the electrical parameter value of the working electrical parameter of the processing unit during timing does not affect its normal operation at this time. Therefore, in the embodiment of the present invention, the preset working electrical parameter of the processing unit is configured to a minimum electrical parameter value allowed when the processing unit is in a working state, thereby reducing the power consumption of the processing unit during the waiting period for a new task. At the same time, since the processing unit remains in the working state, the processing unit can quickly adjust the electrical parameter value of the working electrical parameter upon receiving a new task, allowing it to execute the new task in a timely manner.

In the embodiment of the present invention, since the working frequency and the working voltage have a significant impact on the power consumption of the processing unit, the preset working electrical parameter can include at least one of the working frequency and the working voltage to enable a more significant reduction in power consumption after adjusting the working electrical parameters.

In other embodiments of the present invention, after the timing begins, the processing unit can also be controlled to enter a standby state when it is in the power supply state. In the standby state, the working frequency of the processing unit is 0, and the internal clock of the NPU can be turned off, making its internal frequency being 0. At this time, the NPU is completely inactive, entering a deep sleep mode, where the method can also effectively reduce power consumption.

Compared to configuring the working electrical parameter to the minimum electrical parameter value in the working state, the standby state has lower power consumption, but the response speed of the standby state is slower. Both the standby state and configuring the preset working electrical parameter to the minimum electrical parameter value allowed when the processing unit is in a working state belong to low power consumption modes, and one can be configured based on the response speed or power consumption needs for task execution, without limitation herein.

S150: controlling, if no new task is received by the processing unit when the timing duration reaches a preset duration, the power supply to stop supplying power to the processing unit.

In the embodiment, if the timing duration reaches the preset duration and the processing unit has not received a new task, this can indicate that the processing unit has not had a task to process for an extended period. At this point, the power supply to the neural network processor can be stopped, i.e., powered off. It is understood that even in a power supply state, the processing unit still generates some power consumption to maintain itself in a low-power-consumption states such as standby or sleep mode, even if it is not executing a task. Once powered off, the processing unit no longer generates any power consumption. Additionally, since the processing unit has no new tasks, the power consumption caused by the neural network can be reduced without affecting the normal operation of the electronic equipment.

In the embodiment, the preset duration can be determined based on the actual working scenario of the processing unit. For example, in some scenarios where the processing unit needs to handle a large number of different tasks, and processes tasks frequently, a longer preset duration can be configured to reduce the possibility of frequent power off of the processing unit. In scenarios where the processing unit has fewer tasks to execute, due to a lower task frequency, a shorter preset duration can be configured to ensure timely power-off after task completion, thereby reducing power consumption. The specific value of the preset duration is not restricted herein.

In some embodiments, after the step of starting a timer in response to the processing unit completing the current task, the power consumption management method for the processing unit further includes: stopping the timer, if the processing unit receives a new task before the timing duration reaches the preset duration; re-acquiring the parameter value of the environment parameters; re-determining, based on the re-acquired parameter value of the environment parameters, the target electrical parameter value of the preset working electrical parameter; and controlling the processing unit to execute the new task based on the re-determined target electrical parameter value.

After the processing unit completes one task, the working environment of the processing unit can change. For instance, in mobile devices, changes in the temperature could put the power consumption of the processing unit at a high level in the current environment. Therefore, in the embodiment, when the processing unit receives a new task, new target electrical parameter values can be re-determined based on the environment parameters, and the new task can be executed using the re-determined target electrical parameter values. This avoids higher power consumption during new task execution, or avoids low efficiency during new task execution, thereby keeping the overall power consumption of the processing unit at a lower level.

In one embodiment of the present invention, when the processing unit is in a powered-off state, the power supply can be controlled to power the processing unit again in response to a request to assign a new task to the processing unit.

As mentioned earlier, after the timing duration reaches the preset duration, the power supply to the processing unit is stopped, causing the processing unit to enter a powered-off state. In some electronic equipments, the processing unit may not start simultaneously when the electronic equipment is powered on, which requires separate control to start the processing unit. Before the processing unit is started, it remains in a powered-off state. When the electronic equipment is running, if there is a need for the processing unit to execute a new task, the processing unit needs to be started. Therefore, in response to the request to assign a new task to the processing unit, the power supply can be controlled to provide power to the processing unit again.

In one embodiment of the present invention, the new task can be assigned by the control unit to the processing unit, and the control unit will need to assign a new task to the processing unit. Therefore, before the task is assigned to the processing unit, the control unit can control the power supply to power the processing unit; and then, the control unit issues the task to the processing unit.

In other embodiments, other units within the electronic equipment can have the request to assign a new task to the processing unit. For example, the GPU needs the processing unit to perform a certain task. In the embodiment, other units other than the control unit, before assigning a new task to the processing unit, can send a notification message to the control unit, which indicates that a task is assigned to the processing unit. After receiving the notification message, the control unit can control the power supply to power the processing unit. After the processing unit is successfully powered by the power supply, the control unit sends a response to the other unit that sends the notification message, indicating that the processing unit is powered on. After receiving the response back from the control unit, which indicates that the processing unit is powered on, the other unit assigns the task to the processing unit.

In one embodiment, other units can, before each time a new task is sent to the processing unit, send a notification message to the control unit, which indicates that a task is to be assigned to the processing unit; and after receiving a response indicating that the processing unit is powered on, the other units then assign a new task to the processing unit.

In other embodiments, it can also be the case that, only if the processing unit has been powered off, the other units, before assigning a new task to the processing unit, send a notification message to the control unit, which indicates that a task is to be assigned to the processing unit; and after receiving a response indicating that the processing unit is powered on, the other units then assign a new task to the processing unit. In cases where the processing unit has not been powered off, new tasks are directly assigned to the processing unit. In the embodiment, after the control unit controls the power supply to stop powering the processing unit, it can notify other units that the processing unit has been powered off.

The above is merely an example, and the specific method can be configured based on the actual connection and control methods of the electronic equipment, without limitations herein.

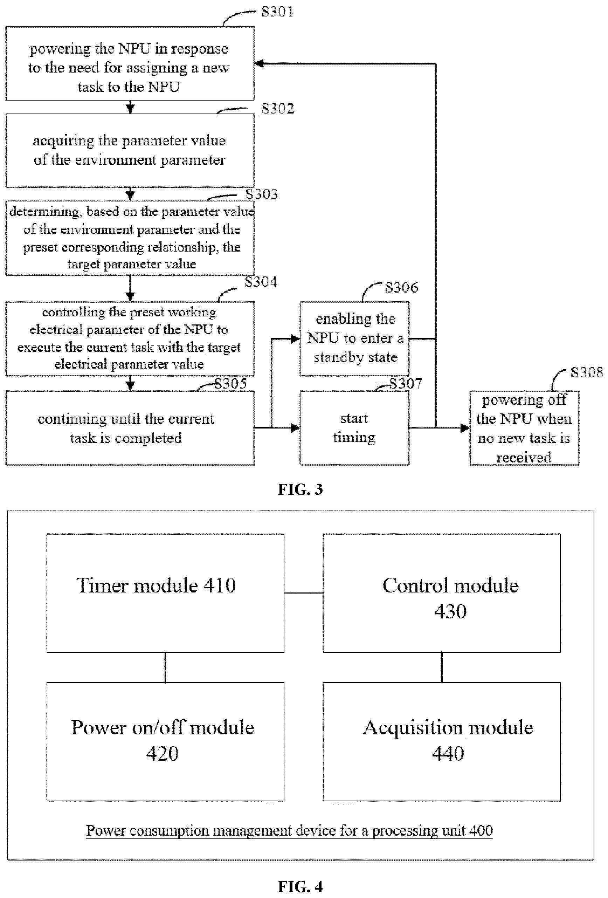

For better understanding, an example is provided to explain the method of the present invention, but it should not be considered as a limitation of the present invention. Referring to FIG. 3, FIG. 3 is a schematic diagram of a complete process of a power consumption management method for a processing unit provided by one embodiment of the present invention. In the example, the processing unit is an NPU, and the power consumption management method of the processing unit can include the following steps.

First, when the processing unit is in a powered-off state, step S301 can be executed, including powering the NPU in response to the need for assigning a new task to the NPU. After power is supplied, steps S302 to S304 are executed sequentially, including: S302, acquiring the parameter value of the environment parameter; S303, determining, based on the parameter value of the environment parameter and the preset corresponding relationship, the target parameter value; and S304, controlling the preset working electrical parameter of the NPU to execute the current task with the target electrical parameter value.

S305: continue until the current task is completed. Then, S306 and S307 are executed simultaneously, including: S306, enabling the NPU to enter a standby state; and S307, start timing.

If a new task is received before the timing duration reaches the preset duration, steps S301 to S307 are re-executed. If no new task is received, step S308 is executed, including: powering off the NPU when no new task is received.

For details of the specific steps above, the previous description can be referred to, which will not be repeated herein.

Based on the same inventive concept, the embodiments of the present invention also provide a power consumption management device for a processing unit. The power consumption management device for a processing unit is applied to the control unit of an electronic equipment, and the electronic equipment also includes a processing unit and a power supply that provides power to the processing unit. The control unit, the processing unit, and the power supply are interconnected.

Referring to FIG. 4, FIG. 4 is a schematic diagram of a power consumption management device for a processing unit provided by one embodiment of the present invention. The power consumption management device for a processing unit includes an acquisition module 440, and a control module 430.

The acquisition module 440 is configured for obtaining a parameter value of an environmental parameter of a working environment of the processing unit.

The control module 430 is configured for determining, based on the parameter value of the environmental parameter and a preset corresponding relationship, a target electrical parameter value of a preset working electrical parameter, wherein the preset corresponding relationship includes a corresponding relationship between different parameter values of the environmental parameter and different target electrical parameter values of the preset working electrical parameter, and the different target electrical parameter values of the preset working electrical parameter are electrical parameter values that enable the power consumption of the processing unit to meet a preset requirement at different parameter values of the environmental parameter; and controlling the preset working electrical parameter of the processing unit to execute a current task with the target electrical parameter value.

The environmental parameters include a current temperature of the working environment of the processing unit. The preset corresponding relationship includes a corresponding relationship between different temperature ranges of the current temperature and different electrical parameter values of the preset working electrical parameter. The control module 430 is specifically configured for determining a target temperature range in which the temperature value of the current temperature is located, in the parameter values of the environmental parameter; and determining the target electrical parameter value of the preset working electrical parameter corresponding to the target temperature range based on the preset corresponding relationship.

The environmental parameters include a current power supply voltage that powers the processing unit. The preset corresponding relationship includes a corresponding relationship between different power supply voltage ranges of the power supply and different electrical parameter values of the preset working electrical parameter. The control module 430 is specifically configured for determining a target voltage range in which the voltage value of the current power supply voltage is located, in the parameter values of the environmental parameter; and determining the target electrical parameter value of the preset working electrical parameter corresponding to the target voltage range based on the preset corresponding relationship.

The environmental parameters include a current power supply capacity that powers the processing unit. The preset corresponding relationship includes a corresponding relationship between different power supply capacity ranges of the current power supply capacity and different electrical parameter values of the preset working electrical parameter. The control module 430 is specifically configured for determining a target power supply capacity range in which the current power supply capacity is located, in the parameter values of the environmental parameter; and determining the target electrical parameter value of the preset working electrical parameter corresponding to the target power supply capacity range based on the preset corresponding relationship.

The power consumption management device for a processing unit further includes a timer module 410 and a power on/off module 420.

The timer module 410 is configured for starting a timer in response to the processing unit completing the current task, wherein the timer module 410 is further configured with a preset duration; and the power on/off module 420 controls, if no new task is received by the processing unit when the timing duration reaches a preset duration, the power supply to stop supplying power to the processing unit.

The control module 430 is configured for configuring the preset working electrical parameter of the processing unit to a minimum electrical parameter value allowed when the processing unit is in a working state, where the preset working electrical parameter includes a working electrical parameter related to the power consumption of the processing unit.

The preset working electrical parameter configured by the control module 430 includes at least one of the working frequency and working voltage of the processing unit.

The control module 430 is further configured for, after the timer starts, controlling the processing unit to enter a standby state when it is in the power supply state, wherein, in the standby state, the working frequency of the processing unit is 0.

The power on/off module 420 is further configured for controlling, when the processing unit is in a powered-off state, and in response to a request to assign a new task to the processing unit, the power supply to provide power to the processing unit.

The timer module 410 is further configured for, after the timer starts, stopping the timer, if the processing unit receives a new task before the timing duration reaches the preset duration. The acquisition module 440 is further configured for re-acquiring the parameter value of the environment parameters. The control module 420 is further configured for re-determining, based on the re-acquired parameter value of the environment parameters, the target electrical parameter value of the preset working electrical parameter; and controlling the processing unit to execute the new task based on the re-determined target electrical parameter value.

It can be understood that the function realized by the aforementioned power consumption management device for a processing unit is similar to the aforementioned power consumption management method of a processing unit, and specific details can be referred to in the foregoing content, which will not be elaborated herein.

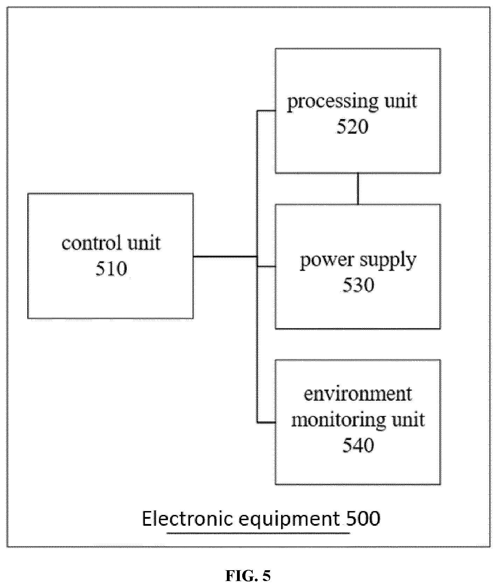

Based on the same inventive concept, the embodiments of the present invention also provide an electronic equipment. Referring to FIG. 5, FIG. 5 is a schematic diagram of an electronic equipment provided in one embodiment of the present invention. The electronic equipment 500 includes: a control unit 510, a processing unit 520, and a power supply 530. The control unit 510 is controllably connected to the processing unit 520 and the power supply 230, and the power supply 530 is connected to the processing unit 520 to supply power to the processing unit 520.

The control unit 510 can be a CPU, MCU, or other device with control functions, and is configured to execute the power consumption management method of the processing unit provided in the aforementioned embodiments of the present invention. The processing unit can be an NPU, GPU, ISP, DPU, VPU, etc., and the content of the power consumption management method of the processing unit can be referred to in the foregoing content and will not be repeated herein.

In one embodiment of the present invention, the electronic equipment 500 can also include: an environment monitoring unit 540, wherein the environment monitoring unit 540 is configured to monitor the working environment of the processing unit 520 and obtain environment parameters. The environmental monitoring unit 540 is also connected to the control unit 510 and is further configured to provide the environmental parameters to the control unit 510 so that the control unit executes the aforementioned power consumption management method of the processing unit that requires environmental parameters.

The technical features of the above embodiments can be freely combined without conflict, and the resulting embodiments are encompassed within the scope of the present invention.

The above is only a specific embodiment of the present invention, but the scope of protection of the present invention is not limited thereto. Any person skilled in the art can easily envisage changes or substitutions within the technical scope disclosed in the present invention, which should be encompassed within the scope of protection of the present invention. Therefore, the scope of protection of the present invention shall be stated to be subject to the scope of protection of the claims.

It should be noted that the terms "comprise", "include", or any other variations herein are intended to encompass non-exclusive inclusion. This means that processes, methods, items, or devices that include a series of elements not only contain those elements explicitly listed but also contain other elements that are not explicitly mentioned or inherently part of such processes, methods, items, or devices. In the absence of further limitations, the inclusion of an element specified by the phrase "comprising a..." does not exclude the presence of additional identical elements in the process, method, article, or apparatus that includes the specified element.

## Claims

1. A power consumption management method for a processing unit, applied to a control unit of an electronic equipment, **characterized in that** the electronic equipment further comprises the processing unit, and the control unit is connected to the processing unit; and the power consumption management method for the processing unit comprises:
obtaining a parameter value of an environmental parameter of a working environment of the processing unit;
determining, based on the parameter value of the environmental parameter and a preset corresponding relationship, a target electrical parameter value of a preset working electrical parameter, wherein the preset corresponding relationship comprises a corresponding relationship between different parameter values of the environmental parameter and different target electrical parameter values of the preset working electrical parameter, and the different target electrical parameter values of the preset working electrical parameter are electrical parameter values that enable a power consumption of the processing unit to meet a preset requirement at the different parameter values of the environmental parameter; and
controlling the preset working electrical parameter of the processing unit to execute a current task with the target electrical parameter value.

2. The power consumption management method for the processing unit according to claim 1, wherein the environmental parameter comprises a current temperature of the working environment of the processing unit; the preset corresponding relationship comprises a corresponding relationship between different temperature ranges of the current temperature and different electrical parameter values of the preset working electrical parameter; and
the step of determining, based on the parameter value of the environmental parameter and a preset corresponding relationship, a target electrical parameter value of a preset working electrical parameter comprises:
determining a target temperature range in which a temperature value of the current temperature is located, in parameter values of the environmental parameter; and
determining a target electrical parameter value of the preset working electrical parameter corresponding to the target temperature range based on the preset corresponding relationship.

3. The power consumption management method for the processing unit according to claim 1, wherein the electronic equipment further comprises a power supply that provides power to the processing unit, and the control unit, the processing unit, and the power supply are connected to each other;
the environmental parameter comprises a current power supply voltage that powers the processing unit; the preset corresponding relationship comprises a corresponding relationship between different power supply voltage ranges of the power supply and different electrical parameter values of the preset working electrical parameter; and
the step of determining, based on the parameter value of the environmental parameter and a preset corresponding relationship, a target electrical parameter value of a preset working electrical parameter comprises:
determining a target voltage range in which a voltage value of the current power supply voltage is located, in parameter values of the environmental parameter; and
determining a target electrical parameter value of the preset working electrical parameter corresponding to the target voltage range based on the preset corresponding relationship.

4. The power consumption management method for the processing unit according to claim 1, wherein the electronic equipment further comprises a power supply that provides power to the processing unit, and the control unit, the processing unit, and the power supply are connected to each other; the environmental parameter comprises a current power supply capacity that powers the processing unit; the preset corresponding relationship comprises a corresponding relationship between different power supply capacity ranges of the current power supply capacity and different electrical parameter values of the preset working electrical parameter; and
the step of determining, based on the parameter value of the environmental parameter and a preset corresponding relationship, a target electrical parameter value of a preset working electrical parameter comprises:
determining a target power supply capacity range in which the current power supply capacity is located, in parameter values of the environmental parameter; and
determining a target electrical parameter value of the preset working electrical parameter corresponding to the target power supply capacity range based on the preset corresponding relationship.

5. The power consumption management method for the processing unit according to any one of claims 1 to **4,** wherein the electronic equipment further comprises a power supply that provides power to the processing unit, and the control unit, the processing unit, and the power supply are connected to each other; and
after the step of controlling the preset working electrical parameter of the processing unit to execute a current task with the target electrical parameter value, the method further comprises:
starting a timer in response to the processing unit completing the current task; and
controlling, when no new task is received by the processing unit when a timing duration reaches a preset duration, the power supply to stop supplying power to the processing unit.

6. The power consumption management method for the processing unit according to claim 5, wherein, after the step of starting a timer, the method further comprises:
configuring the preset working electrical parameter of the processing unit to a minimum electrical parameter value allowed when the processing unit is in a working state, wherein the preset working electrical parameter comprises a working electrical parameter related to the power consumption of the processing unit.

7. The power consumption management method for the processing unit according to claim 6, wherein the preset working electrical parameter comprises at least one of a working frequency and a working voltage of the processing unit.

8. The power consumption management method for the processing unit according to claim 5, wherein, after the step of starting a timer, the method further comprises:
controlling the processing unit in a power supply state to enter a standby state, wherein in the standby state, a working frequency of the processing unit is 0.

9. The power consumption management method for the processing unit according to claim 5, wherein the power consumption management method for the processing unit further comprises:
controlling, when the processing unit is in a powered-off state and in response to a request to assign a new task to the processing unit, the power supply to provide power to the processing unit.

10. The power consumption management method for the processing unit according to claim 5, wherein, after the step of starting a timer in response to the processing unit completing the current task, the method further comprises:
stopping the timer, when the processing unit receives a new task before the timing duration reaches the preset duration;
re-acquiring a parameter value of the environment parameter;
re-determining, based on the re-acquired parameter value of the environment parameter, a target electrical parameter value of the preset working electrical parameter; and
controlling the processing unit to execute the new task based on the re-determined target electrical parameter value.

11. A power consumption management device for a processing unit, applied to a control unit of an electronic equipment, **characterized in that** the electronic equipment further comprises the processing unit, and the control unit is connected to the processing unit; and
the power consumption management device for the processing unit comprises an acquisition module and a control module, wherein
the acquisition module is configured for obtaining a parameter value of an environmental parameter of a working environment of the processing unit;
the control module is configured for determining, based on the parameter value of the environmental parameter and a preset corresponding relationship, a target electrical parameter value of a preset working electrical parameter, wherein the preset corresponding relationship comprises a corresponding relationship between different parameter values of the environmental parameter and different target electrical parameter values of the preset working electrical parameter, and the different target electrical parameter values of the preset working electrical parameter are electrical parameter values that enable a power consumption of the processing unit to meet a preset requirement at the different parameter values of the environmental parameter; and controlling the preset working electrical parameter of the processing unit to execute a current task with the target electrical parameter value.

12. An electronic equipment, **characterized by** comprising:
a control unit, configured to execute the power consumption management method for the processing unit according to any one of claims 1 to 10;
a processing unit, connected to the control unit;
an environment monitoring unit, configured to monitor the working environment of the processing unit and obtain the environment parameter, wherein
the environment monitoring unit is further connected to the control unit and is further configured to provide the environment parameter to the control unit so that the control unit executes the power consumption management method for the processing unit according to any one of claims 1 to 10; and
a power supply, connected to both the control unit and the processing unit, and configured to supply or cut off power to the processing unit in response to control of the control unit.

13. A readable storage medium, **characterized in that** a program is stored in the readable storage medium, and when the computer program is run on a processor, the processor executes the power consumption management method for the processing unit according to any one of claims 1 to 10.
